# EUROPÄISCHE PATENTSCHRIFT

(11) **EP 0 884 486 B1**
(45) Veröffentlichungstag und Bekanntmachung des Hinweises auf die Patenterteilung: **13.08.2003**
(21) Anmeldenummer: 98107636.7
(22) Anmeldetag: 27.04.1998
(51) Int. Cl.: F15B 20/00, F15B 11/028, H01H 35/38

(54) **Elektrohydraulische Spannvorrichtung**
Electrohydraulic clamping device
Dispositif de serrage électrohydraulique

(30) Priorität: 10.06.1997 DE 29710127 U
(43) Veröffentlichungstag der Anmeldung: 16.12.1998
(73) Patentinhaber: HAWE Hydraulik GmbH & Co. KG, 81673 München (DE)
(72) Erfinder: Neumair, Georg Dipl.Ing., 85402 Thalhausen (DE); Heusser, Martin Dipl.Ing., 81245 München (DE)
(74) Vertreter: Grünecker, Kinkeldey, Stockmair & Schwanhäusser Anwaltssozietät

(56) Entgegenhaltungen:
- DE-A- 4 314 801
- DE-A- 4 423 541
- DE-A- 4 423 585
- DE-A- 4 446 538
- US-A- 3 405 244

## Beschreibung

Die Erfindung betrifft eine elektrohydraulische Spannvorrichtung gemäß dem Oberbegriff des Anspruchs 1.

Für elektrohydraulische Spannvorrichtungen in Werkzeugmaschinen (Dreh-, Fräs-, Bohrmaschinen oder dgl.), die von einer übergeordneten, elektronischen Steuereinheit geführt werden, gelten außerordentlich hohe Sicherheitsanforderungen. Ehe die Steuereinheit einen Operationsschritt veranlaßt, benötigt sie möglichst viele Informationen, um den Operationsschritt ohne Schaden für die Werkzeugmaschine, die Spannvorrichtung, das Bedienungspersonal oder das Werkstück durchführen zu lassen. Elektrohydraulische Werkstück-Spannvorrichtungen sind bekannt aus DE-A-44 23 541, DE-A-44 23 585 und DE-A-44 46 538.

Bei der aus DE-A-44 23 541 bzw. DE-A-44 23 585 bekannten Spannvorrichtung ist ein z.B. bei einem Stromausfall oder bei einer NOT-AUS-Betätigung selbsttätig in eine Absperrstellung schaltendes Sicherheitsventil vorgesehen, um den zum Einstellen des Spanndrucks mittels des Proportional-Vorsteuerventils eingestellten Vorsteuerdruck und mit diesem auch den eingestellten Spanndruck aufrechtzuhalten. Eine Änderung des Spanndrucks wäre ggfs. für das Werkstück oder die Werkzeugmaschine kritisch, sobald nach Behebung der Störung die Bearbeitung wieder aufgenommen wird. Da das Sicherheitsventil den Vorsteuerdruck bei einer solchen Störung aufrechthält, kann der Spanndruck auch weiterhin ordnungsgemäß an die Steuereinheit gemeldet werden. Eine Gutmeldung ist dann für die Steuereinheit jedoch nur eine scheinbar sichere Information, weil keine Bestätigung vorliegt, ob stromauf des Sicherheitsventils und stromauf des Einstellventils hydraulisch oder elektrisch korrekte Verhältnisse liegen, die die ordnungsgemäße Durchführung späterer Arbeitsschritte zulassen. Es könnte ein Kabelbruch, ein Kabelschaden, ein Leitungsschaden oder ein Ausfall der Druckquelle aufgetreten sein, den die Steuereinheit aufgrund der korrekten Spanndruckmeldung nicht wahrnimmt. Einen solchen Schaden könnte die Steuereinheit beispielsweise erst später daraus ableiten, daß sich der Spanndruck nicht mehr verstellen läßt bzw. nicht mehr erreicht wird.

Bei der elektrohydraulischen Werkstück-Spannvorrichtung gemäß DE-A-44 46 538 wird bei einem Stromausfall eine Schaltstange des Proportional-Vorsteuerventils mechanisch blockiert, um den Vorsteuerdruck und den Spanndruck trotz der Störung zunächst aufrechtzuerhalten und auch eine korrekte Spanndruckmeldung für die übergeordnete Steuereinheit zu erzeugen. Aufgrund der korrekten Spanndruckmeldung wähnt sich die Steuereinheit nur in scheinbarer Sicherheit, weil die Spanndruckmeldung keine Beurteilung der hydraulischen oder elektrischen Zustände stromauf des Proportional-Vorsteuerventils und des Spanndruck-Einstellventils ermöglicht.

Bei einer aus DE-A-43 14 801 bekannten Steuerungs- und Überwachungsvorrichtung für eine Abkantpresse wird ein Porportional-Wegeventil während der Senkbewegung der oberen Pressenwange als Sicherheitsventil benutzt. Dazu wird bei Ruhestellung, in der alle Arbeitsanschlüsse am Wegeventil abgesperrt sind, des Schieberkolbens des Wegeventils die Ruhestellung entweder durch einen Endschalter oder einen Positionsgeber in Form eines Wegaufnehmers überwacht. Mit der Sicherheitssteuerung bei einer Werkzeugmaschinen-Spannvorrichtung ist diese Überwachungseinrichtung nicht vergleichbar, da sie exakt von entgegengesetzten Voraussetzungen ausgeht.

Weiterer Stand der Technik ist enthalten in US-A-34 05 244.

Im Hinblick auf die hohen Sicherheitsanforderungen für Spannvorrichtungen liegt der Erfindung die Aufgabe zugrunde, zur Steigerung der Betriebssicherheit auf baulich einfache Weise für die Steuereinheit eine weitere Sicherheits-information bereitzustellen. Auf bauliche einfache Weise soll dabei bedeuten, daß die zusätzliche Information aus der Funktion einer ohnedies vorhandenen Komponente der Spannvorrichtung gewonnen werden soll.

Die gestellte Aufgabe wird erfindungsgemäß mit den Merkmalen des Anspruchs 1 gelöst.

Es wird das ohnedies vorhandene Sicherheitsventil bei seiner zum Aufrechterhalten des Vorsteuerdrucks vorgesehenen Funktion genutzt, um in Kombination mit der Überwachungseinrichtung für die übergeordnete Steuereinheit die Information abzuleiten, ob stromauf des Sicherheitsventils und des Spanndruck-Einstellventils ordnungsgemäße hydraulische bzw. elektrische Voraussetzungen für ordnungsgemäß durchzuführende zukünftige Operationsschritte vorliegen. Das Sicherheitsventil ist bei zum Einstellen des Vorsteuerdrucks ausreichendem Eingangsdruck des Proportional-Vorsteuerventils stets offen. Das Sicherheitsventil nimmt seine Absperrstellung ein, wenn sich die Druckverhältnisse so verändern, daß sie ohne Eingriff des Sicherheitsventils das Aufrechterhalten des Vorsteuerdrucks nicht mehr gewährleisten. Aus den zum Ansprechen des Sicherheitsventils führenden Druckverhältnissen bzw. einer Positionsänderung des für das Ansprechen des Sicherheitsventils verantwortlichen Elements im Sicherheitsventil wird die Information abgeleitet, daß stromauf des Sicherheitsventils und damit auch stromauf des Einstellventils geänderte hydraulische bzw. elektrische Verhältnisse vorliegen, die spätere Operationsschritte nicht in vorgesehener Weise durchführen lassen werden. Diese Information kann die Steuereinheit, z.B. in Verbindung mit der Spanndruckmeldung, auswerten. Die Information ist aussagefähig und zuverlässig. Die Überwachungseinrichtung läßt sich auf baulich einfache Weise am bzw. im vorhandenen Sicherheitsventil anordnen.

Ein gemäß Anspruch 2 verwendeter elektrischer Schalter, insbesondere ein Mikroschalter, oder ein Druckschalter bzw. ein Näherungsschalter oder Näherungssensor, sind kostengünstig und baulich einfach mit dem Sicherheitsventil zu kombinieren, ohne dessen normale Funktion zu beeinträchtigen. Auch erzeugen solche Schalter direkt oder mit nur geringfügigem elektronischen Aufwand für die übergeordnete Steuereinheit gut verwertbare Signale.

Gemäß Anspruch 3 wird die Bewegung des Entsperrkolbens und/oder der für die Bewegung des Entsperrkolbens verantwortliche Entsperrdruck zum Ableiten der Information herangezogen.

Um möglichst frühzeitig die eine kritische Zustandsänderung repräsentierende Information ableiten zu können, ist es gemäß Anspruch 4 zweckmäßig, den Schalter bzw. Druckschalter auf einen Schaltdruck einzustellen, der nahe bei dem Druck liegt, bei dem das Sicherheitsventil in seine Absperrstellung schaltet.

Baulich einfach wird gemäß Anspruch 5 der Schaltdruck eingestellt durch Abstimmen der Beaufschlagungsfläche des Entsperrkolbens auf die Kraft seiner Rückstellfeder und gegebenenfalls die Beaufschlagungsfläche des Ventilelementes in dem Sitzventil. Bei dieser Abstimmung ist jedoch im Auge zu behalten, daß das Sicherheitsventil ordnungsgemäß in seine Absperrstellung schaltet, ehe der Vorsteuerdruck absinken kann.

Gemäß Anspruch 6 wird ein Druckschalter verwendet, der mit seinem Schaltdruck auf die Veränderung des Entsperrdrucks abgestimmt ist. Es ist dabei keine mechanische Verbindung zwischen dem Entsperrkolben und dem Druckschalter erforderlich, so daß die Funktion des Sicherheitsventils überhaupt nicht beeinflußt wird.

Gemäß Anspruch 7 ist jedoch einem einfachen und kostengünstigen elektrischen Schalter, insbesondere einem Mikroschalter mit kleinem Schalthub der Vorzug zu geben. Die geringe Betätigungskraft des Schalters ist für die Funktion des Sicherheitsventils unerheblich.

Zweckmäßigerweise wird gemäß Anspruch 8 der Schalter durch einen Stößel betätigt, auf den der Entsperrkolben einwirkt.

Gemäß Anspruch 9 läßt sich der Schaltpunkt des Schalters präzise einjustieren.

Anhand der Zeichnung wird eine Ausführungsform des Erfindungsgegenstandes erläutert. Es zeigen:
- Fig. 1: in Form eines Blockschaltbildes eine elektrohydraulische Spannvorrichtung, beispielsweise für ein Werkstück oder ein Werkzeug einer Werkzeugmaschine, und
- Fig. 2: einen Teillängsschnitt eines in Fig. 1 mit Symbolen angedeuteten Details.

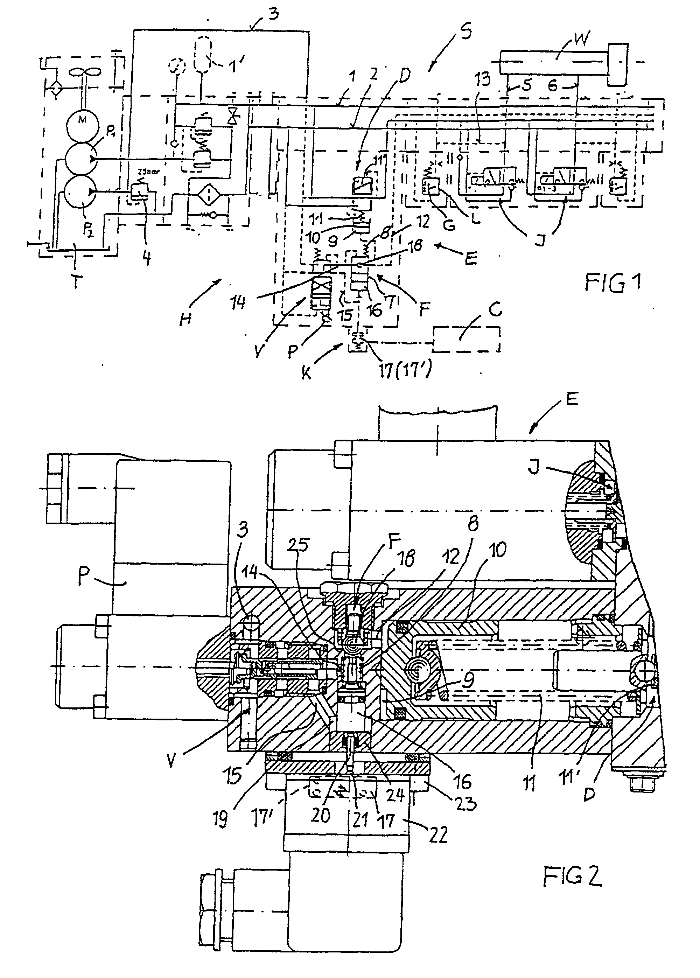

In einer elektrohydraulischen Spannvorrichtung S in Fig. 1, insbesondere für ein Werkstück oder Werkzeug einer Werkzeugmaschine, werden die Bewegungen eines zum Spannen verwendeten Hydromotors W (beispielsweise eines doppelt wirkenden Hydraulikzylinders) gesteuert, und werden der Spanndruck und gegebenenfalls ein Rückholdruck überwacht, um einer übergeordneten, nicht gezeigten Steuereinheit, der Werkzeugmaschine (Dreh-, Bohr-, Fräsmaschine oder dgl.) Operationsschritte anzuzeigen und zu melden, ob jeder Operationsschritt korrekt oder fehlerhaft ausgeführt oder vorbereitetet ist. Beispielsweise wird eine ordnungsgemäße Beaufschlagung des Hydromotors W gemeldet und ob der vorbestimmte Spanndruck erreicht oder nicht erreicht ist, und zwar unabhängig von der gewählten Höhe des Spanndrucks. Ferner wird die übergeordnete Steuereinheit informiert, wenn ein elektrisch oder hydraulisch kritischer Zustand eingetreten ist.

Als Druckquelle sind zwei Pumpen P1 und P2 vorgesehen, die von einem Motor M getrieben werden. Die Pumpe P1 mit größerer Förderleistung ist für einen hohen Systemdruck ausgelegt, z.B. für einen Speicherladebetrieb mittels eines Druckspeichers 1', und an eine Pumpenleitung 1 und eine Rücklaufleitung 2 angeschlossen. Die Pumpe P2 mit kleinerer Förderleistung ist an eine eigene Druckleitung 3 und über einen Druckbegrenzer 4 an die Rücklaufleitung 2 angeschlossen, wobei der Druckbegrenzer 4 den Druck in der weiteren Druckleitung 3 auf einen niedrigen Wert, z.B. 25 Bar begrenzt. Beide Pumpen P1, P2 können Konstantförderpumpen sein.

Ein wesentlicher Teil der Spannvorrichtung S ist eine hydraulische Steuervorrichtung H mit einer Einstellvorrichtung E für den Spanndruck. In der Einstellvorrichtung E ist ein Proportional-Vorsteuerventil V und diesem nachgeordnet ein Sicherheitsventil F angeordnet. Das Proportional-Vorsteuerventil V ist an die weitere Druckleitung 3 angeschlossen und mit dem Sicherheitsventil F über zwei parallele Steuerleitungen 14, 15 verbunden. Die Steuerleitung 14 wird mit einem vom Proportional-Vorsteuerventil V in Abhängigkeit von der Bestromung eines Proportionalmagneten P variierbaren Vorsteuerdruck beaufschlagt, während die Steuerleitung 15 mit einem Entsperrdruck für das Sicherheitsventil F (bei der gezeigten Ausführungsform ein hydraulisch gegen eine Feder 8 entsperrbares Sitzventil oder Kugelrückschlagventil 7) beaufschlagbar ist. Die Steuerleitung 14 setzt sich stromab des Sicherheitsventils F als Steuerleitung 12 fort, die mit einer Kammer 9 des Einstellventils D und gleichzeitig einer Seite eines Differenzdruck-Schaltventils L verbunden ist. Mit dem Vorsteuerdruck in der Steuerleitung 12 wird der mittels des Einstellventils D regelbare Spanndruck eingestellt. Das Einstellventil D ist in der gezeigten Ausführungsform ein regelndes Druckminderventil, das an die Pumpenleitung 1 und an die Rücklaufleitung 2 angeschlossen ist. Das Einstellventil D ist mit einem aus zwei Sitzventilen bestehenden Wegesteuerventil J verbunden, wobei die beiden Sitzventile (beispielsweise 3/2-Wegeventile) mit dem Hydromotor W über Verbraucherleitungen 5, 6 verbunden sind. In der Verbraucherleitung 5 ist beispielsweise der Spanndruck einzusteuem, der vom Einstellventil D in Abhängigkeit vom Vorsteuerdruck in der Steuerleitung 12 nach Maßgabe der Bestromung des Proportionalmagneten P in seinem Druckwert eingestellt und gehalten wird. Zum Überwachen des Spanndrucks und Melden, ob der Spanndruck erreicht ist, oder nicht, ist das Differenzdruck-Schaltventil L mit einem Schalter G kombiniert, und baulich vom Einstellventil D getrennt zwischen die Steuerleitung 12 und eine Steuerleitung 13 eingesetzt, die von der Verbraucherleitung 5 abzweigt und mit einem vom Verbraucherdruck (Spanndruck) abgeleiteten Referenzdruck beaufschlagt wird.

Das Einstellventil D besitzt ein Regelelement 11', das durch einen Steuerdruck entgegengesetzt zu einer Regelfeder 11 beaufschlagt ist. Die Regelfeder 11 wird durch einen Stellkolben 10 in der Kammer 9 derart belastet, daß die wirksame Federkraft der Regelfeder 11 direkt vom Vorsteuerdruck in der Steuerleitung 12 abhängt. Wird der Vorsteuerdruck durch Änderung der Bestromung des Proportionalmagneten P angehoben, dann wird auch der Spanndruck entsprechend angehoben, und umgekehrt.

Bei einer Funktionsstörung, z.B. bei einem Stromausfall, einem Kabelbruch, einem Leitungsbruch, oder dgl., wird das Sicherheitsventil F durch die Feder 8 in die in Fig. 1 gezeigte Absperrstellung verstellt, in der ein Schließelement 18 die Steuerleitung 12 leckagefrei absperrt, ehe der eingestellte Vorsteuerdruck in der Steuerleitung 12 abfallen kann. Dadurch kann das Einstellventil D den Spanndruck auf der eingestellten Höhe halten. Das Differenzdruck-Schaltventil L mit seinem Schalter G ist noch in der Lage, den Spanndruck korrekt zu melden. Der Spanndruck kann bis zu 400 Bar oder mehr betragen, während der Vorsteuerdruck in der Steuerleitung 12 geringer als der durch den Druckbegrenzer 4 eingestellte Druck in der weiteren Druckleitung 3 ist und, z.B. nur zwischen 3 und 20 Bar beträgt, d.h., nur einen Bruchteil des Spanndrucks.

Der Hydromotor B kann wie das als Sitzventil ausgebildete Wegesteuerventil J leckagedicht sein. Beim Einstellventil D ist Leckagedichtheit zumindest weitestgehend gegeben, falls sich das Einstellventil in der Absperrstellung befindet, wie auch im Differenzdruck-Schaltventil L und im in der Absperrstellung befindlichen Sicherheitsventil F. Dies bedeutet, daß der Spanndruck bzw. Referenzdruck in der Steuerleitung 13 wie auch der Vorsteuerdruck in der Steuerleitung 12 beträchtliche Zeit unverändert gehalten werden.

Zum Detailaufbau des Proportional-Vorsteuerventils V und des Sicherheitsventils F wird auf DE-A-44 23 541 und DE-A-44 23 585 hingewiesen.

Anstelle des als regelndes Druckminderventil ausgebildeten Einstellventils D könnte auch ein mittels der Regelfeder 11 und dem Stellkolben 10 arbeitendes Druckbegrenzungsventil vorgesehen sein, wobei das Wegesteuerventil direkt an die Pumpenleitung 1 angeschlossen wird. Das Wegesteuerventil J könnte ein 4/3-Wegesteuerventil mit blockierter Mittelstellung sein, zweckmäßigerweise in Sitzventilbauweise. Anstelle zweier Pumpen P1, P2 könnte eine einzige Pumpe als Druckquelle dienen, wobei dann zweckmäßig vor dem Proportional-Vorsteuerventil V ein Zusatz-Druckminderventil vorgesehen ist, um den Eingangsdruck des Proportional-Vorsteuerventils V auf die für den niedrigen Vorsteuerdruck ausreichende Druckhöhe zu mindern. Bei nur einer Pumpe könnte die Leitung zum Proportional-Vorsteuerventil V von der Pumpenleitung 1 abzweigen.

Das Sicherheitsventil F weist einen aus der Steuerleitung 15 mit dem Entsperrdruck gegen die Rückstellfeder 8 beaufschlagbaren Entsperrkolben 16 auf. Femer ist eine elektrische Überwachungseinrichtung K mit dem Sicherheitsventil F kombiniert, die einer übergeordneten Steuereinheit C (gestrichelt angedeutet) ein Informationssignal übermitteln kann, das anzeigt, ob stromauf des Proportional-Vorsteuerventils V und des Einstellventils D hydraulisch bzw. elektrisch korrekte Zustände vorliegen, oder nicht. Beispielsweise könnte ein Kabelbruch, ein Leitungsschaden, ein Pumpenausfall oder dgl. zu einem elektrischen bzw. hydraulischen Zustand führen, der einen nachfolgenden Operationsschritt der Spannvorrichtung S zumindest teilweise unmöglich macht und zu einem Schaden führen könnte. Die Überwachungseinrichtung K nutzt die Funktion des Absperrventils F, um das jeweilige Signal abzuleiten. Beispielsweise enthält die Überwachungseinrichtung K einen elektrischen Schalter oder Mikroschalter 17.

Bei normaler Funktion der Spannvorrichtung hat das Sicherheitsventil F keinen Einfluß, d.h., der Entsperrkolben 16 hält das Ventilschließelement 18 in der Offenstellung, so daß der Vorsteuerdruck unbeeinflußt in der Steuerleitung 12 herrscht. Im Falle eines Stromausfalls drückt die Rückstellfeder 8 den Entsperrkolben 16 so rasch nach unten, daß das Ventilschließelement 18 die Rückströmung sperrt und der Vorsteuerdruck in der Steuerleitung 12 nicht absinkt. Das Einstellventil D hält den Spanndruck. Der Schalter G meldet ordnungsgemäß "Spanndruck vorhanden oder Spanndruck erreicht". Die Drücke in den Steuerleitungen 14 und 15 fallen ab. Der Schalter 17 spricht entweder auf den abfallenden Druck der Steuerleitung 15 bzw am Entsperrkolben 16 an oder auf die sich ändernde Position des Entsperrkolbens 16, und meldet dies an die Steuereinheit C. Auf gleiche Weise wird bei einem Leitungsschaden oder einem Pumpenausfall die Steuereinheit C informiert. Ist nach Beheben der Störung der Druck in der Steuerleitung 14 wieder ausreichend hoch, um den Vorsteuerdruck in der Steuerleitung 12 zu halten oder sogar zu erhöhen, dann meldet der Schalter 17 erneut die Zustandsänderung zum Guten.

In Fig. 2 ist ein Detail der Spanndruck-Einstellvorrichtung E gezeigt, die das mit dem Proportionalmagneten P bestückte Proportional-Vorsteuerventil V, das mit diesem über die Steuerleitungen 14 und 15 verbundene Sicherheitsventil F, am Sicherheitsventil F die Überwachungseinrichtung K, angrenzend an das Sicherheitsventil F das Einstellventil D und oberhalb desselben das Wegesteuerventil J enthält. Vom Einstellventil D sind der über die Steuerleitung 12 beaufschlagbare Stellkolben 10 an der Regelfeder 11 sowie das Regelelement 11' gezeigt. Zwischen den Steuerkanälen 14 und 12 ist im Sicherheitsventil F ein Ventilsitz 25 vorgesehen, der mit dem als Kugel ausgebildeten Ventilschließelement 18 zusammenarbeitet. Unterhalb des Ventilsitzes 25 ist die Rückstellfeder 8 angeordnet, die den Entsperrkolben 16 nach unten beaufschlagt. Der Entsperrkolben 16 ragt in eine Kammer 19, an die die Steuerleitung 15 angeschlossen ist. Die Kammer 19 wird durch ein Verschlußelement 24 begrenzt, das einen mit einer Dichtung versehenen Durchgang für einen Stößel 20 aufweist, der auf ein Betätigungselement 21 des Schalters 17, z.B. eines Mikroschalters, ausgerichtet ist.

Anstelle eines mechanisch betätigbaren Schalters oder Mikroschalters 17 könnte auch ein Druckschalter 17' vorgesehen sein, der mit dem in der Kammer 19 herrschenden Druck beaufschlagbar ist und mittels eines den Druck abtastenden Schaltkolbens oder einer Schaltmembrane bei Erreichen eines vorbestimmten Schaltdrucks ein Signal erzeugt.

Der Schalter 17 ist in einem Schaltergehäuse 22 enthalten, das in einem Halter 23 gegebenenfalls verstellbar festgelegt ist.

Die Beaufschlagungsfläche des Entsperrkolbens 16 und die Kraft der Rückstellfeder 8 sind (unter Einbeziehung des Beaufschlagungsfläche des Ventilschließelementes 18 im Ventilsitz 25) derart aufeinander abgestimmt, daß der Entsperrkolben 16 bei einem vorbestimmten Druck in der Steuerleitung 15 bzw. der Steuerkammer 19 nach unten verstellt wird, der z.B. noch oberhalb des maximal einstellbaren Vorsteuerdrucks in der Steuerleitung 12 liegt, jedoch unterhalb des normalerweise in der weiteren Druckleitung 3 herrschenden Eingangsdrucks des Vorsteuerventils V, vorzugsweise nahe bei diesem Eingangsdruck. Auf diese Weise wird sichergestellt, daß der Steuerdruck in der Steuerleitung 12 bei einer Störung an der Vorsteuerseite nicht ungewollt vermindert werden kann.

Über den Stößel 20 betätigt der Entsperrkolben 16 den Schalter 17, beispielsweise sobald das Ventilschließelement 18 auf den Ventilsitz 25 aufsetzt oder im Begriff ist, auf den Ventilsitz 25 aufzusetzen. Der Schaltpunkt des Schalters 17 ist auf eine vorbestimmte Position des Entsperrkolbens und indirekt auf einen bestimmten Druck in der Steuerkammer 19 eingestellt. Wird ein Druckschalter 17' anstelle des mechanischen Schalters 17 verwendet, dann ist der Schaltdruck des Druckschalters 17' nicht auf den Hubweg des Entsperrkolbens 16, sondern nur auf den vorerwähnten Druck der Steuerkammer 19 eingestellt.

Für die Steuereinheit C sind insbesondere die gleichzeitig anliegenden Signale "Spanndruck erreicht bzw. Spanndruck vorhanden" und das Meldesignal der Überwachungseinrichtung K "möglicher Störungsfall stromauf des Sicherheitsventils" gemeinsam wichtig, weil das Meldesignal "Spanndruck erreicht bzw. Spanndruck vorhanden" allein die Steuereinheit C zu dem logischen Schluß veranlassen könnte, daß stromauf des Sicherheitsventils keine elektrische und/oder hydraulische Störung vorläge und demzufolge spätere Bearbeitungsschritte oder eine Verstellung des Spanndrucks eingeleitet werden könnten. Liegt hingegen das Signal "Spanndruck erreicht oder Spanndruck vorhanden" gleichzeitig mit dem Signal "mögliche hydraulische und/oder elektrische Störung stromauf des Sicherheitsventils" an, dann kann die Steuereinheit C den logischen Schluß ziehen, keine weiteren Bearbeitungsschritte mehr einzuleiten bzw. ein Störungssignal abzugeben. Liegt hingegen das Signal "Spanndruck nicht erreicht bzw. Spanndruck nicht vorhanden" und das Signal "mögliche Störung stromauf des Sicherheitsventils" vor, dann kann die Steuereinheit C den logischen Schluß ziehen, zunächst abzuwarten, bis das Signal "Spanndruck erreicht bzw. Spanndruck vorhanden" eintrifft und das Signal "mögliche Störung stromauf des Sicherheitsventils" verschwindet, wie es beispielsweise beim Verstellen des Spanndrucks (Anheben des Spanndrucks oder Absenken des Spanndrucks) der Fall sein kann. Diese Signalkombination kann also von der Steuereinheit C als zunächst noch unkritisch einklassifiziert werden.

Die Überwachungseinrichtung K könnte auch in der Steuerleitung 15 oder gegebenenfalls sogar der Steuerleitung 14 (mit einem Druckschalter 17') angeordnet werden, oder sogar stromauf des Proportional-Vorsteuerventils V. Der wesentliche Vorteil der in Fig. 2 gezeigten Lösung besteht darin, daß die für ein aussagefähiges Signal notwendigen Informationen in der Steuerkammer 19 aufgrund der Funktion des Sicherheitsventils F auftreten, und die Steuerkammer 19 ohnedies durch eine die Montage des Entsperrkolbens 16 ermöglichende Verschlußschraube oder einen Stopfen verschlossen ist, der nur durch das Verschlußstück 24 zu ersetzen oder zum Anbringen des Druckschalters zu entfernen ist. Weitere Modifikationen an dem Konzept des Sicherheitsventils sind nicht erforderlich. Die für die Betriebssicherheit wichtige Überwachungsfunktion läßt sich mit geringem Kosten- und Bauaufwand verwirklichen.

## Patentansprüche

1. Elektrohydraulische Spannvorrichtung (S), für eine Werkzeugmaschine, mit einem Spannhydromotor (W), der mittels eines in wenigstens einer Verbraucherleitung (5, 6) angeordneten Wegesteuerventils (J) und einer elektrisch verstellbaren Spanndruck-Einstellvorrichtung (E) an eine Druckquelle (P1, P2) bzw. einen Rücklauf (T) anschließbar ist, wobei die Spanndruck-Einstellvorrichtung (E) aufweist:
stromauf des Wegesteuerventils (J) ein vorgesteuertes Einstellventil (D), das ein von einer Regelfeder (11) belastetes Regelelement (11') zum Einstellen des Spanndrucks aufweist, wobei die Regelfeder (11) mittels eines Stellkolbens (10) hydraulisch durch einen Vorsteuerdruck in ihrer wirksamen Federkraft verstellbar ist,
ein zwischen dem Stellkolben (10) und der Druckquelle (P1, P2) bzw. dem Rücklauf (T) angeordnetes Proportional-Vorsteuerventil (V) zum Einstellen des Vorsteuerdrucks in direkter Abhängigkeit von der Bestromung eines Proportional-Magneten (P) des Proportional-Vorsteuerventils (V),
ein zwischen dem Proportional-Vorsteuerventil (V) und dem Stellkolben (10) angeordnetes Sicherheitsventil (F) zum leckagefreien, selbsttätigen Halten des Vorsteuerdrucks bei einer Systemstörung wie einem Stromausfall oder einer NOT-AUS-Betätigung,
und wenigstens einen elektrischen Schalter (G), der unter Ansprechen auf einen vom Spanndruck abgeleiteten Referenzdruck das Erreichen, Verfehlen oder Unterschreiten des Spanndrucks an eine Steuereinhet meldet, **dadurch gekennzeichnet, daß** mit dem Sicherheitsventil (F) eine einen Signal für die Steuereinheit erzeugende, auf sich ändernde Druckverhältnisse und/oder Bewegungen im Sicherheitsventil (F) ansprechende Überwachungseinrichtung (K) baulich kombiniert ist.

2. Vorrichtung nach Anspruch 1, **dadurch gekennzeichnet, daß** die Überwachungseinrichtung (K) einen elektrischen Schalter (17), vorzugsweise einen Mikroschalter oder einen Druckschalter (17') oder Näherungsschalter bzw. -sensor aufweist, der auf eine eine Systemstörung repräsentierende Änderung bei einem druckabhängig bewegbaren Element (16, 18) im Sicherheitsventil (F) anspricht, und daß die Änderung die Druckverhältnisse am und/oder die Hubbewegung bzw. die Position des Elementes (16, 18) ist bzw. sind.

3. Vorrichtung nach Anspruch 2, **dadurch gekennzeichnet, daß** das Sicherheitsventil (F) ein hydraulisch entsperrbares Sitzventil (7), z.B. ein Kugel-Rückschlagventil mit einem mit einem Sitz (25) kooperierenden Ventilelement (18), ist, das mittels eines im Sicherheitsventil (F) druckabhängig verstellbaren Entsperrkolbens (16) entsperrbar ist, der in Entsperrichtung von einem mittels des Proportional-Vorsteuerventils (V) aufgebrachten Entsperrdruck gegen eine Rückstellfeder (8) beaufschlagbar ist, und daß der Schalter (17, 17') auf den Entsperrkolben (16) ausgerichtet und durch den Entsperrkolben (16) und/oder den Entsperrdruck betätigbar ist.

4. Vorrichtung nach Anspruch 3, **dadurch gekennzeichnet, daß** der Schalter (17, 17') auf einen Schaltdruck eingestellt ist, der zwischen dem Vorsteuerdruck und einem Druck liegt, bei dem das Sicherheitsventil (F) in Absperrstellung schaltet, vorzugsweise näher bei diesem Druck.

5. Vorrichtung nach wenigstens einem der Ansprüche 3 oder 4, **dadurch gekennzeichnet, daß** der Schaltdruck eingestellt ist durch Abstimmung der Beaufschlagungsfläche des Entsperrkolbens (16) auf die Kraft der Rückstellfeder (8) und, vorzugsweise, auch auf die Beaufschlagungsfläche des Ventilelements (18).

6. Vorrichtung nach Anspruch 4, **dadurch gekennzeichnet, daß** der Druckschalter (17') einen auf der Entsperrseite des Entsperrkolbens (16) angeordneten Schaltkolben oder eine Schaltmembrane aufweist, der bzw. die bei Erreichen des Schaltdrucks den Druckschalter (17') betätigt.

7. Vorrichtung nach wenigstens einem der vorhergehenden Ansprüche, **dadurch gekennzeichnet, daß** der Schaltpunkt des vom Entsperrkolben betätigbaren Schalters (17), vorzugsweise des Mikroschalters, auf eine das Erreichen des Schaltdrucks repräsentierende Position des Entsperrkolbens (16) eingestellt ist.

8. Vorrichtung nach einem der vorhergehenden Ansprüche 3 bis 7, **dadurch gekennzeichnet, daß** der Entsperrkolben (16) über einen abgedichteten Stößel (20) auf den Schalter (17) einwirkt.

9. Vorrichtung nach wenigstens einem der vorhergehenden Ansprüchen 3 bis 8, **dadurch gekennzeichnet, daß** der Schalter (17) am Sicherheitsventil (F) in Bewegungsrichtung des Entsperrkolbens (16) verstellbar ist.

## Claims

1. Electrohydraulic clamping device (S) for a machine tool, comprising a hydraulic clamping motor (W) which can be connected to a pressure source (P1, P2) or a return (T) by means of a directional control valve (J), arranged in at least one load line (5, 6), and an electrically adjustable clamping-pressure setting device (E), the clamping-pressure setting device (E) having:
a pilot-controlled setting valve (D) which is upstream of the directional control valve (J) and has a regulating element (11'), loaded by a regulating spring (11), for setting the clamping pressure, the regulating spring (11) being hydraulically adjustable in its effective spring force by a pilot-control pressure by means of an actuating piston (10),
a proportional pilot-control valve (V), arranged between the actuating piston (10) and the pressure source (P1, P2) or the return (T), for setting the pilot-control pressure in direct relationship to the energizing of a proportional magnet (P) of the proportional pilot-control valve (V),
a safety valve (F), arranged between the proportional pilot-control valve (V) and the actuating piston (10), for the leakage-free, automatic retention of the pilot-control pressure in the event of a system fault such as a power failure or an EMERGENCY STOP actuation,
and at least one electrical switch (G) which, while responding to a reference pressure derived from the clamping pressure, signals to a control unit that the clamping pressure is reached, is absent or is not reached,
**characterized in that** a monitoring device (K) producing a signal for the control unit and responding to changing pressure conditions and/or movements in the safety valve (F) is structurally combined with the safety valve (F).

2. Device according to Claim 1, **characterized in that** the monitoring device (K) has an electrical switch (17), preferably a microswitch or a pressure switch (17'), or proximity switch or sensor, which responds to a change, representing a system fault, at an element (16, 18) in the safety valve (F), this element (16, 18) being movable as a function of pressure, and **in that** the change is the pressure conditions at and/or the stroke movement or the position of the element (16, 18).

3. Device according to Claim 2, **characterized in that** the safety valve (F) is a seat valve (7) which can be unblocked hydraulically, e.g. a ball check valve having a valve element (18) which co-operates with a seat (25) and can be unblocked by means of an unblocking piston (16) which is adjustable in the safety valve (F) as a function of pressure and to which an unblocking pressure can be applied against a return spring (8) by means of the proportional pilot-control valve (V), and **in that** the switch (17, 17') is aligned with the unblocking piston (16) and can be actuated by the unblocking piston (16) and/or the unblocking pressure.

4. Device according to Claim 3, **characterized in that** the switch (17, 17') is set to a switching pressure which lies between the pilot-control pressure and a pressure at which the safety valve (F) switches into shut-off position, preferably closer to this pressure.

5. Device according to at least one of Claims 3 and 4, **characterized in that** the switching pressure is set by matching the application area of the unblocking piston (16) to the force of the return spring (8) and preferably also to the application area of the valve element (18).

6. Device according to Claim 4, **characterized in that** the pressure switch (17') has a switching piston or a switching diaphragm which is arranged on the unblocking side of the unblocking piston (16) and which actuates the pressure switch (17') when the switching pressure is reached.

7. Device according to at least one of the preceding claims, **characterized in that** the switching point of the switch (17), preferably a microswitch, which can be actuated by the unblocking piston, is set to a position of the unblocking piston (16) which represents the point at which the switching pressure is reached.

8. Device according to one of the preceding claims 3 to 7, **characterized in that** the unblocking piston (16) acts on the switch (17) via a sealed-off plunger (20).

9. Device according to at least one of the preceding claims 3 to 8, **characterized in that** the switch (17) at the safety valve (F) can be adjusted in the direction of movement of the unblocking piston (16).

## Revendications

1. Dispositif de serrage électrohydraulique (S) pour une machine-outil, présentant un moteur de serrage hydraulique (W), qui peut être raccordé à une source de pression (P1, P2) ou à un retour (T), au moyen d'une vanne de distribution de commande (J) disposée dans au moins une conduite de consommation (5, 6) et d'un dispositif de réglage de pression de serrage (E) réglable électriquement, dans lequel le dispositif de réglage de pression de serrage (E) présente :
en amont de la vanne de distribution de commande (J), une vanne de réglage (D) pilotée qui présente un élément de régulation (11') sollicité par un ressort de régulation (11) pour régler la pression de serrage, le ressort de régulation (11) pouvant être réglé, dans sa force de ressort active, hydrauliquement au moyen d'un piston actionneur (10) par l'intermédiaire d'une pression de commande,
une vanne de commande proportionnelle (V) disposée entre le piston actionneur (10) et la source de pression (P1, P2) ou le retour (T) pour régler la pression de commande en fonction directe de l'alimentation électrique d'un aimant proportionnel (P) de la vanne de commande proportionnelle (V),
une vanne de sécurité (F) disposée entre la vanne de commande proportionnelle (V) et le piston actionneur (10) pour maintenir automatiquement et de manière étanche la pression de commande dans le cas d'un incident système comme une coupure de courant ou une action d'ARRÊT D'URGENCE,
et au moins un commutateur électrique (G) qui, en réponse à une pression de référence déduite de la pression de serrage, signale à une unité de commande que la pression de serrage est atteinte, manque ou n'est pas atteinte, **caractérisé en ce qu'**à la vanne de sécurité (F) est combiné par construction un dispositif de surveillance (K) générant un signal pour l'unité de commande, répondant à des conditions de pression changeantes et/ou à des déplacements dans la vanne de sécurité (F).

2. Dispositif selon la revendication 1, **caractérisé en ce que** le dispositif de surveillance (K) présente un commutateur électrique (17), de préférence un microrupteur ou un manocontacteur (17') ou commutateur ou détecteur de proximité, qui répond à une variation représentant un incident système sur un élément (16, 18) mobile en fonction de la pression dans la vanne de sécurité (F), et que la variation est constituée par les conditions de pression sur l'élément (16, 18) et/ou le déplacement ou la position de celui-ci.

3. Dispositif selon la revendication 2, **caractérisé en ce que** la vanne de sécurité (F) est une vanne à siège (7) pouvant être débloquée hydrauliquement, par exemple une vanne anti-retour à bille présentant un élément de vanne (18) coopérant avec un siège, qui peut être débloquée au moyen d'un piston de déblocage (16) réglable dans la vanne de sécurité (F) en fonction de la pression, qui dans le sens de déblocage peut recevoir en opposition à un ressort de rappel (8) une pression de déblocage appliquée au moyen de la vanne de commande proportionnelle (V), et que le commutateur (17, 17') est orienté sur le piston de déblocage et peut être actionné par le piston de déblocage (16) et/ou la pression de déblocage.

4. Dispositif selon la revendication 3, **caractérisé en ce que** le commutateur (17, 17') est réglé sur une pression de commutation, qui se situe entre la pression de commande et une pression à laquelle la vanne de sécurité (F) commute en position d'arrêt, de préférence plus près de cette pression.

5. Dispositif selon au moins l'une des revendication 3 ou 4, **caractérisé en ce que** la pression de commande est réglée par adaptation de la surface active du piston de déblocage (6) à la force du ressort de rappel (8) et, de préférence, également à la surface active de l'élément de vanne (18).

6. Dispositif selon la revendication 4, **caractérisé en ce que** le commutateur de pression (17') présente un piston de commutation disposé sur le côté de déblocage du piston de déblocage (16) ou une membrane de commutation, qui actionne le commutateur de pression (17') lorsque la pression de commutation est atteinte.

7. Dispositif selon au moins l'une des revendications précédentes, **caractérisé en ce que** le point de commutation du commutateur (17), de préférence du microrupteur, pouvant être actionné par le piston de déblocage est réglé sur une position du piston de déblocage (16) représentant la pression de commutation atteinte.

8. Dispositif selon l'une des revendications précédentes 3 à 7, **caractérisé en ce que** le piston de déblocage (16) agit sur le commutateur (17) par l'intermédiaire d'un poussoir (20) étanche.

9. Dispositif selon au moins l'une des revendications précédentes 3 à 8, **caractérisé en ce que** le commutateur (17) peut être déplacé sur la vanne de sécurité (F) dans la direction de déplacement du piston de déblocage (16).
